Europäisches Patentamt

**European Patent Office**

Office européen des brevets

(19)

(11) Publication number: **0 025 049**
**B1**

(12) **EUROPEAN PATENT SPECIFICATION**

(45) Date of publication of patent specification: **04.01.84**

(21) Application number: **80900531.7**

(22) Date of filing: **13.03.80**

(86) International application number:
**PCT/SE80/00077**

(87) International publication number:
**WO 80/01954 18.09.80 Gazette 80/21**

(51) Int. Cl.³: **G 01 N 25/18,
G 01 K 13/00**

(54) **HEAT TRANSMISSION METER SYSTEM.**

(30) Priority: **16.03.79 SE 7902378**

(43) Date of publication of application:
**18.03.81 Bulletin 81/11**

(45) Publication of the grant of the patent:
**04.01.84 Bulletin 84/1**

(84) Designated Contracting States:
**CH DE GB**

(56) References cited:
**CH - B - 442 793
DE - A - 2 724 846
FR - A - 2 057 174
SE - C - 49 223
US - A - 3 552 185**

(73) Proprietor: **MEMOTEKNIK AB
Box 233
S-931 01 Skellefteä (SE)**

(72) Inventor: **OJA, Viktor
23B Axvägen
S-931 38 Skellefteä (SE)**
Inventor: **WIKSTRÖM, Sigvard
4 Videstigen
S-931 43 Skellefteä (SE)**

(74) Representative: **Onn, Thorsten et al,
AB Stockholms Patentbyra Zacco & Bruhn P.O.
Box 3129
S-103 62 Stockholm (SE)**

Courier Press, Leamington Spa, England.

# Heat transmission meter system

The invention relates to a heat transmission meter system for measuring the heat transmission coefficient $k$ for a wall portion separating media having different temperatures, making use of temperature sensing elements which are connected to an evaluation device.

In recent years it has been increasingly important to dimension the insulation of buildings in an economical manner. With increasing costs of heating it has been necessary to check and to improve such an insulation. For this purpose different methods of measuring the heat transmission in walls have come into use. One has, then, tried to survey the heat transmission at different places of a wall, and heat cameras have for instance then been used. This has proved that there will often be heat leakages in the walls, which leakages one has not been able to prove earlier in a sufficiently evident manner. Said method, has, however, the disadvantage that it requires a circumstantial equipment and is relatively expensive.

It is therefore desirable to be able to measure heat transmission in a simple manner and to be able to survey the heat transmission in whole wall areas, windows or doors. For that purpose the meter should be simple to bring along, simple to operate and it should rapidly give measuring results. The invention relates to a system for making this possible.

A system of the general kind stated in the introductory paragraph of the description is known from CH—B—442 793. This known system operates with the temperature fall within an insulation layer surrounding steam vessels or steam conducting tubes, which form the walls proper, in order to measure the heat conductivity capacity of the insulation layer. The heat transmission through the wall is of no interest per se, and, consequently, not the outer temperature of the wall. Said temperature fall is compared with the temperature fall between points in the air close to the layer necessitating the provision of a bore through the layer. The latter temperature fall is considered to be linearly related to the distance from the surface of the insulation layer.

Contrary to this, the invention makes no assumptions regarding the linearity of the temperature fall adjacent the wall ("layer"); it does not require any incisions in the wall material; and it operates with comparisons between completely other temperatures than with the known system.

The solution which is suggested according to the invention is characterised in that said system comprises temperature sensing elements for measuring the difference $t_i - t_v$ between the inner temperature $t_i$ and the inner wall temperature $t_v$, to form an input signal, proportional to $t_i - t_v$, to an amplifier constituting said evaluation device and having its output connected to an indicating instrument, means for reading the inner temperature $t_i$, means for reading the outer temperature $t_u$, a feed-back path connected between the output and the input of said amplifier, a manually adjustable means connected in said feedback path for providing an amplification of said input signal, which is proportional to $1/(t_i - t_u)$ as determined by the setting of said adjustable means, so that the output of said amplifier is

$$A \cdot (t_i - t_v)/(t_i - t_u),$$

equivalent with the heat transmission coefficient $k$, where A is a constant chosen to express said output signal as the numerical $k$ value on said indicating instrument.

The invention thereby starts from the following relation between the heat transmission coefficient k and the temperature which influences the measuring:

$$k = A(t_i - t_v)/(t_i - t_u) \text{ W/m}^2 °C$$

where A is a quantity which includes the sum of the heat transfer coefficient for radiation and for convection as well as apparatus parameters, and where $t_i$ is the inner temperature in a room where the measuring is performed, $t_v$ is the inner wall temperature in said room and $t_u$ is the outer temperature outside the wall, on the inside of which the measuring is made. The difference $t_i - t_u$ is measured with conventional thermometers and the corresponding number of degrees can for instance be adjusted with a graduated knob as a feed back value, proportional to $1/(t_i - t_u)$, say $c_2/(t_i - t_u)$, of an amplifier. The difference $t_i - t_v$ is obtained by means of temperature sensing elements which are connected to the input of the amplifier.

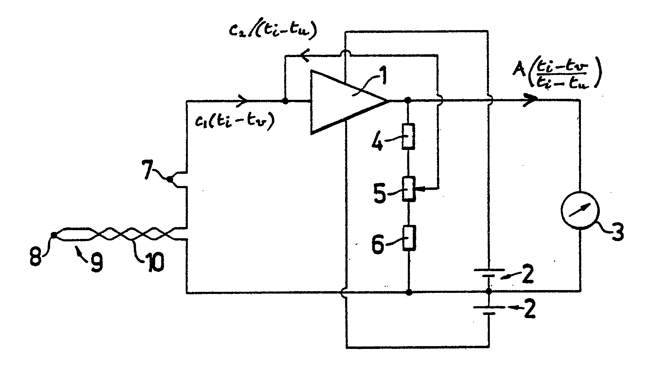

The invention will be described more in detail in connection with the enclosed drawing, which shows an amplifier 1, for instance an operational amplifier, which is fed from a current source 2 and the output of which is connected to an instrument 3. The amplifier has a feedback circuit, here shown as a voltage divider with the resistors 4, 5 and 6, of which the resistor 5 is a potentiometer, from the tap of which the feed back quantity is derived, as the result of the setting of the potentiometer by means of said graduated knob. The difference $c_1(t_i - t_v)$ between the voltages from two temperature sensing elements 7 and 8 is supplied to said input of the amplifier. One thermocouple 7, is mounted in the housing of the system whilst the other thermocouple 8, is mounted in a probe tip, which is connected by a conductor to the input circuit of the amplifier. Through a suitable choice of the shown and suggested circuit elements of the system, which latter need not be described in detail for the understanding of the mode of operation of the invention, the relation according to the said equation can be realized with the required accuracy, and the heat transmission coefficient k can be read directly on the instrument 3.

With the system one can measure the heat transmission coefficient k by aid of the probe and can survey the heat transmission in a wall, a door or a window.

## Claims

1. A heat transmission meter system for measuring the heat transmission coefficient $k$ for a wall portion separating medias having different temperatures, making use of temperature sensing elements which are connected to an evaluation device, characterised in that said system comprises temperature sensing elements for measuring the difference $t_i - t_v$ between the inner temperature $t_i$ and the inner wall temperature $t_v$, to form an input signal, proportional to $t_i - t_v$ to an operational amplifier constituting said evaluation device and having its output connected to an indicating instrument, means for reading the inner temperature $t_i$, means for reading the outer temperature $t_u$, a feed-back path connected between the output and the input of said amplifier, a manually adjustable means connected in said feedback path for providing an amplification of said input signal, which is proportional to $1/(t_i - t_u)$ as determined by the setting of said adjustable means to the temperature difference $t_i - t_u$, so that the output of said amplifier is

$$A . (t_i - t_v)/(t_i - t_u),$$

equivalent with the heat transmission coefficient $k$, where A is a constant chosen to express said output signal as the numerical $k$ value on said indicating instrument.

2. A system as in claim 1, wherein said temperature sensing elements for measuring said temperature difference $t_i - t_v$ include a first element for measuring the inner temperature $t_i$, mounted in the wall of a housing for the system, and a second element for measuring the inner wall temperature $t_v$, mounted at the end of a probe for contacting said inner wall, said first and second elements being interconnected to provide said input signal to said amplifier.

3. A system as in claim 1, wherein said adjustable means is a potentiometer.

## Patentansprüche

1. Anlage zur Messung der Wärmedurchgangszahl $k$ eines Wandteils, das Medien verschiedener Temperaturen trennt, unter Verwendung temperaturabtastender Mittel, die an eine Auswertevorrichtung angeschlossen sind, dadurch gekennzeichnet, dass die Anlage temperaturabtastende Elemente zur Messung des Unterschieds $t_i - t_v$ zwischen der Innentemperatur $t_i$ und der Innenwandtemperatur $t_v$ zur Bildung eines zu $t_i - t_v$ proportionalen Eingangssignals in einen Operatorverstärker, der die erwähnte Auswertevorrichtung ist und seinen Ausgang an ein Anzeigeinstrument angeschlossen hat, Mittel zur Ablesung der Innentemperatur $t_i$, Mittel zur Ablesung der Aussentemperatur $t_u$, eine zwischen dem Ausgang und Eingang des Verstärkers eingeschaltete Rückkupplungsbahn und eine in der Rückkupplungsbahn eingelegte, manuell regelbare Vorrichtung zur Erzielung einer Verstärkung des erwähnten Eingangssignals umfasst, welches verstärkte Signal zu $1/(t_i - t_u)$ proportional ist und von der Verstellung der regelbaren Vorrichtung des Temperaturunterschieds $t_i - t_u$ bestimmt wird, so dass das Ausgangssignal vom Verstärker

$$A(t_i - t_v)/(t_i - t_u)$$

wird, was zur Wärmedurchgangszahl $k$ äquivalent ist, wo A eine Konstante ist, die gewählt ist, das erwähnte Ausgangssignal als den numerischen $k$—Wert des Anzeigeinstruments auszudrücken.

2. Anlage nach Anspruch 1, dadurch gekennzeichnet, dass die temperaturabtastenden Elemente zur Messung des Temperaturunterschieds $t_i - t_v$ aus einem ersten Element zur Messung der Innentemperatur $t_i$ bestehen, das in einer Wand einer Hülle der Anlage montiert ist, sowie aus einem zweiten Element zur Messung der Innenwandtemperatur $t_v$, das am Ende einer Sonde montiert ist, um in Kontakt mit der Innenwand gebracht zu werden, wobei das erste und das zweite Element zusammengekuppelt sind, um das erwähnte Eingangssignal dem Verstärker abzugeben.

3. Anlage nach Anspruch 1, dadurch gekennzeichnet, dass die regelbare Vorrichtung ein Potentiometer ist.

## Revendications

1. Système de mesure du coefficient de transmission de chaleur $k$ d'une partie d'un mur séparant deux fluides de températures différentes, avec utilisation d'éléments thermosensibles reliés à un dispositif d'évaluation, caractérisé en ce qu'il comprend des éléments thermosensibles mesurant la différence $t_i - t_v$ entre la température intérieure $t_i$ et la température $t_v$ de la face intérieure du mur pour former un signal d'entrée, proportionnel à la différence $t_i - t_v$, d'un amplificateur d'opération qui constitue ledit dispositif d'évaluation et dont la sortie est reliée à un instrument indicateur; un organe de lecture de la température intérieure $t_i$; un organe de lecture de la température extérieure $t_u$; une voie de rétroaction connectée entre la sortie et l'entrée dudit amplificateur; un organe manuellement réglable connecté dans ladite voie de rétroaction pour fournir une amplification dudit signal d'entrée, qui est proportionnel au quotient $1/(t_i-t_u)$ grâce au réglage dudit organe réglable à la différence des températures $t_i-t_u$, de sorte que la sortie dudit amplificateur est de

$$A(t_i-t_v)/(t_i-t_u)$$

équivalent au coefficient de transmission de chaleur $k$, où A désigne une constante choisie pour exprimer ledit signal de sortie en tant que la valeur numérique de $k$ audit instrument indicateur.

2. Système selon la revendication 1, caractérisé en ce que lesdits éléments thermosensibles measurant ladite différence des températures $t_i-t_v$ comprennent un premier élément mesurant la température intérieure $t_i$, monté dans la paroi d'un boîtier du système, et un deuxième élément mesurant la température $t_v$ de la face intérieure du mur et monté à l'extrémité d'une sonde destinée à venir en contact avec ladite face intérieure du mur, lesdits premier et deuxième éléments étant connectés entre eux pour fournir ledit signal d'entrée audit amplificateur.

3. Système selon la revendication 1, caractérisé en ce que ledit organe réglable est un potentiomètre.

$$c_2/(t_i-t_u)$$

$$c_1(t_i-t_v)$$

$$A\left(\frac{t_i-t_v}{t_i-t_u}\right)$$

1

7

8  9  10

4

5

6

3

2

2